# EUROPÄISCHE PATENTSCHRIFT

(11) **EP 3 416 823 B1**
(45) Veröffentlichungstag und Bekanntmachung des Hinweises auf die Patenterteilung: **27.05.2020**
(21) Anmeldenummer: 17704766.9
(22) Anmeldetag: 13.02.2017
(51) Int. Cl.: B32B 5/02, B32B 25/08, B32B 25/20, B32B 27/08, B32B 27/20, B32B 27/32, B32B 27/34, B32B 27/40, B32B 1/08, F16L 59/00, F16L 11/00

(54) **WÄRMEISOLIERTE SCHLAUCHLEITUNG UND HERSTELLUNGSVERFAHREN**
HEAT-INSULATED HOSE LINE AND PRODUCTION METHOD
TUYAU FLEXIBLE À ISOLATION THERMIQUE ET PROCÉDÉ DE FABRICATION

(30) Priorität: 16.02.2016 DE 102016102717
(43) Veröffentlichungstag der Anmeldung: 26.12.2018
(73) Patentinhaber: Bührig-Adam Wälzlager UND Antriebstechnik GmbH, 30559 Hannover (DE); ContiTech Elastomerbeschichtungen GmbH, 30165 Hannover (DE)
(72) Erfinder: JÄGER, Manfred, 30559 Hannover (DE)
(74) Vertreter: Taruttis, Stefan Georg
(86) Internationale Anmeldenummer: PCT/EP2017/053162
(87) Internationale Veröffentlichungsnummer: WO 2017/140625

(56) Entgegenhaltungen:
- EP-A1- 1 493 956
- EP-A1- 2 977 191
- EP-B1- 2 573 443
- DE-U1-202011 004 387

## Beschreibung

Die Erfindung betrifft eine flexible wärmeisolierte Schlauchleitung, die insbesondere als Leitung für ein Temperiermedium, z.B. als Dampfleitung oder als Kühlmittelleitung Verwendung findet, sowie ein Herstellungsverfahren für diese Schlauchleitung. Die erfindungsgemäße Schlauchleitung zeichnet sich durch einen einfachen Aufbau und eine gute Wärmeisolierung aus.

### Stand der Technik

Die WO 01/23794 A1 beschreibt eine wärmeisolierte Schlauchleitung, die einen auf seiner Außenfläche plasmabehandelten Innenschlauch aus PTFE aufweist, auf dem eine vernetzbare Kunststoffschicht aufliegt und darauf eine Metallschicht, die wiederum mit einem vernetzbaren Kunststoffbeschichtet ist, und um diese eine Gewebsschicht als Armierung und eine äußere Schutzschicht.

Die EP 1493956 A1 beschreibt einen Schlauch mit einer hochtemperaturbeständigen Außenschicht aus einer vernetzten Kunststoffmischung, die auf einer darunter liegenden Stahldrahtgeflechtslage aufliegt.

Die EP 2573443 B1 beschreibt ein Verfahren zur Isolation, bei dem ein flexibles, teilweise unvernetztes, plastisch verformbares Isolationsmaterial mit einer Pressvorrichtung auf ein Bauteil gepresst wird. Das Isolationsmaterial kann vorexpandierte Mikrokugeln bzw. Poren aufweisen.

Die US 5,488,975 A beschreibt eine flexible Leitung für Fußbodenheizungen, die aus einem Innenschlauch, einer Gewebsschicht als Armierung und daran anliegend einer flexiblen Folie mit einer äußeren Hülle besteht, mit einer Füllmasse, die Unebenheiten der Gewebsschicht ausgleicht. Eine Isolierschicht ist nicht vorgesehen.

Die EP 2 573 443 B1 beschreibt eine als Isoliermasse verwendbare Kautschukmischung auf Basis von Silikonkautschuk, die vorexpandierte Mikrokugeln zur Bildung von geschlossenen Poren enthält.

### Aufgabe der Erfindung

Der Erfindung stellt sich die Aufgabe, eine alternative wärmeisolierte Schlauchleitung bereitzustellen und ein Verfahren zu deren Herstellung.

### Beschreibung der Erfindung

Die Erfindung löst die Aufgabe mit den Merkmalen der Ansprüche, insbesondere mittels einer druckstabilen Schlauchleitung gemäß Anspruch 1.

Optional kann eine Faserschicht, die z.B. gewebt oder bevorzugt geklöppelt ist, zwischen dem Kunststoffschlauch und dem Armierungsgewebe angeordnet sein. Eine solche Faserschicht kann von einer Kunststoffmasse durchdrungen oder beschichtet sein. Bevorzugt ist eine solche Faserschicht frei von einer durchdringenden oder beschichtenden Kunststoffinasse bzw. besteht aus Fasern.

Die innere Schicht der Schlauchleitung wird vorzugsweise von dem Kunststoffschlauch gebildet, der die Leitung für das Medium, insbesondere Dampf, bildet und weist keine zusätzliche Materialschicht auf seiner Innenseite auf. Der Kunststoffschlauch besteht bevorzugt aus wärmebeständigem Kunststoff, z.B. aus Polytetrafluorethylen (PTFE), Polyester-Elastomer (H), Polyamid (N), Nylon-Copolymer (NC), Fluorethylenpropylen (FEP), Ethylen-Propylen-Dien (EPDM), Polyurethan (U), Spezial-Elastomer (HF und/oder PFX), thermoplastischem Elastomer (TPE), Polytetrafluorethylen (PTFE), Perfluoralkoxy-Copolymer (PFA) oder einer Mischung daraus, jeweils ohne oder mit integriertem Armierungsgewebe.

Die Schlauchleitung weist bevorzugt keine zusätzlichen Materialien zwischen dem Kunststoffschlauch, der optionalen Faserschicht, der Armierung und der Isolierschicht auf. Die Außenfläche der Isolierschicht kann mit einer Farbschicht überzogen sein.

Die erfindungsgemäße Schlauchleitung zeichnet sich dadurch aus, dass die Kautschukmischung, die die Isolierschicht bildet, unmittelbar und in unvulkanisiertem Zustand auf das Armierungsgewebe extrudiert ist, bzw. dass das Armierungsgewebe mit der Kautschukmischung mittels Extrusion umspritzt ist, um die Isolierschicht auszubilden. Auf diese Weise geht die Isolierschicht eine formschlüssige Verbindung mit dem Armierungsgewebe ein. Durch das Extrudieren kann die Kautschukmischung, die die Isolierschicht bildet, in Zwischenräume des Armierungsgewebes eindringen und eine ausreichend feste Verbindung mit diesem eingehen, z.B. ohne dass eine zusätzliche Kleberschicht zwischen dem Armierungsgewebe und der Isolierschicht angeordnet ist. Die Kautschukmischung, die die Isolierschicht bildet, wird nach dem Umspritzen des Armierungsgewebes vernetzt, z.B. ausgelöst durch Erwärmung von außen und/oder durch Erwärmung von innen durch Fördern eines warmen Fluids durch den Kunststoffschlauch oder durch Bestrahlung mit β- oder γ-Strahlung.

Das Armierungsgewebe kann aus Kunststofffasern bestehen, bevorzugt aus Metalldrähten, insbesondere aus Edelstahldrähten, die um den Kunststoffschlauch gewickelt, bevorzugt geklöppelt sind.

Die Isolierschicht besteht vorzugsweise aus einer vernetzten Kautschukmischung, die Poren enthält, bzw. eine Porenstruktur, vorzugsweise geschlossene Poren, aufweist. Die Poren bzw. die Porenstruktur wird bevorzugt durch Mikrokugeln, auch als Mikrohohlkugeln bezeichnet, z.B. vorexpandierte oder expandierbare Mikrokugeln wie sie unter der Bezeichnung Expancel® von Akzo Nobel NV, Holland, vertriebenen werden, gebildet. Die Mikrokugeln können hierbei aus Glas, Phenolharz, Acrylnitril, Kohlenstoff oder thermoplastischem Kunststoff, insbesondere mit einer Größe <100 µm, bevorzugter < 50 µm oder <10 µm, bestehen. Alternativ kann die Porenstruktur durch Zusetzen eines Treibmittels in die Kautschukmischung erzeugt werden.

Bevorzugt hat die Isolierschicht eine Wärmeleitfähigkeit von maximal 0,2, bevorzugter von maximal 0,1 W/(mK).

Die Isolierschicht kann z.B. eine Dicke von 10 bis 30 mm, bevorzugt 15 bis 25 mm aufweisen.

Die erfindungsgemäße Schlauchleitung hat den Vorteil, dass sie einschließlich ihrer Isolierschicht flexibel ist und einen einfachen Aufbau hat, so dass sie durch kontinuierliches Umspritzen der Armierung, die den Kunststoffschlauch einfasst, hergestellt werden kann und z.B. durch Ablängen und Anbringen von Anschlußstücken an ihren Enden konfektioniert werden kann. Die Schlauchleitung ist durch die Isolierung hinreichend isoliert, um den Wärmeverlust signifikant zu verringern und um hohe Temperaturen auf ihrer Außenfläche zu verhindern, z.B. wenn die Schlauchleitung eine Isolierschicht von 15 bis 20 mm aufweist und mit gespanntem Dampf von 150°C beaufschlagt ist.

Die Kautschukmischung ist durch einen Gehalt an wenigstens einem Vernetzungsmittel vernetzbar, bevorzugt durch einen Gehalt an einem Peroxid, und wird mit Hilfe des wenigstens einen Vernetzungsmittels, das bevorzugt wenigstens ein Peroxid ist, vulkanisiert.. Eine für die Isolierschicht bevorzugte Kautschukmischung ist in der EP 2 573 443 B1 beschrieben und enthält oder besteht aus
100 phr Silikonkautschuk, z.B. Elastosil R401/30 oder Elastosil R420/50 S, erhältlich von Wacker Chemie,
0 bis 6 phr, bevorzugt wenigstens 0,5 phr Hitzestabilisatoren,
0 bis 6 phr, bevorzugt wenigstens 1 phr Flammschutzmittel, z.B. Elastosil AUX SB2, erhältlich von Wacker Chemie,
0 bis 3 phr, bevorzugt wenigstens 0,5 phr Verarbeitungshilfsmittel,
1 bis 4 phr Peroxidvernetzer,
2 bis 20 phr Silikonöl,
2 bis 15 phr vorexpandierte Mikrokugeln, z.B. Expancel® 920 DE40 d30, erhältlich von Akzo Nobel NV, Holland,
0 bis 12 phr, bevorzugt wenigstens 1 phr Pigmentpaste, z.B. Elastosil Farbpaste PT (schwarz), erhältlich von Wacker Chemie.

Dabei bezeichnet phr (parts per hundred rubber) die Gewichtsanteile bezogen auf die 100 Gewichtsteile Kautschuk.

Die Kautschukmischung der Isolierschicht hat bevorzugt eine Mooney-Viskosität ML(1+4) nach DIN53523 Teil 3 nach Lagerung für 7d bei 23 °C von 5 bis 30 ME, bevorzugter von 5 bis 20 ME.

Das Herstellungsverfahren weist die Schritte auf oder besteht daraus:
Anordnen eines Armierungsgewebes um einen Kunststoffschlauch,
optional Anordnen einer Faserschicht zwischen dem Kunststoffschlauch und dem Armierungsgewebe,
Umspritzen des Armierungsgewebes mit einer vernetzbaren Kautschukmischung, die Poren enthält, z.B. vorexpandierte Mikrokugeln oder ein Treibmittel, und
Vernetzen der Kautschukmischung. Das Vernetzen kann durch Erwärmen oder mittels Strahlenvernetzung erfolgen, insbesondere mit β-Strahlung oder γ-Strahlung.

Es hat sich gezeigt, dass die vernetzte Isolierschicht eine glatte Oberfläche und ausreichende Abriebfestigkeit hat.

Die Schlauchleitung ist ausreichend flexibel und weist bevorzugt eine ausreichende Festigkeit insbesondere des Verbunds zwischen der Armierung und der Isolierschicht auf, um für die dynamische Belastung durch Biegen geeignet zu sein, die beim freien Biegen der Schlauchleitung oder in sogenannten Energieketten auftritt. Daher kann die Schlauchleitung in Energieketten angeordnet sein, insbesondere in Energieketten, die an gegeneinander beweglichen Teilen angebracht sind. Energieketten sind z.B. aus aneinander angelenkten bzw. gegeneinander verschwenkbaren Elementen zusammengesetzt, die z.B. einen einseitig offenen oder umfänglich geschlossenen Kanal bilden, in dem die Schlauchleitung angeordnet sein kann. Bevorzugt weist die Energiekette einen minimalen Biegeradius von zumindest dem fünf-fachen Außendurchmesser der Schlauchleitung auf, z.B. einen minimalen Biegeradius, der gleich dem fünf-fachen Außendurchmesser der Schlauchleitung ist. Entsprechend ist die Schlauchleitung zur Verwendung als Leitung für ein Temperiermedium geeignet, die dynamisch gebogen wird, z.B. bis in den minimalen Biegeradius, z.B. zumindest 10 mal, bevorzugt zumindest 20 mal pro Stunde, wobei die Schlauchleitung in einer Energiekette geführt sein kann oder frei gebogen wird und z.B. nur die an beiden Enden der Schlauchleitung festgelegten Preßhülsen an gegeneinander bewegten Maschinenteilen festgelegt sind.

Erfindungsgemäß weist die Schlauchleitung an zumindest einem Ende, bevorzugt an jedem Ende ein Anschlußstück auf, z.B. mit einer gegenüber der Schlauchleitung drehbar angeordneten Mutter. Das Anschlußstück ist bevorzugt eine Preßfassung mit einem in den Kunststoffschlauch ragenden Rohrstück und einer Preßhülse, die auf dem Armierungsgewebe aufliegt. Die Preßhülse kann mittels einer Presse radial auf das Armierungsgewebe aufgepreßt werden. Dabei ist die Isolierschicht in dem Bereich, in dem die Preßhülse auf dem Armierungsgewebe aufliegt, grob entfernt. Ein Vorteil liegt darin, dass zur Befestigung einer Preßfassung die Isolierung nicht vollständig von dem Armierungsgewebe entfernt sein muss, um eine ausreichende Fixierung einer Preßhülse zu erzielen. Daher kann beim Verfahren zur Herstellung die Isolierschicht grob entfernt werden und anschließend eine Preßhülse über einen endständigen Bereich des Armierungsgewebes aufgeschoben und dann auf das Armierungsgewebe aufgepreßt werden, wobei noch Reste der Isolierung auf dem Armierungsgewebe haften. Solche Reste der Isolierung sind z.B. in Zwischenräumen des Armierungsgewebes angeordnet und weisen bevorzugt eine Schichtdicke von maximal 1 mm, bevorzugt maximal 0,5 mm auf. Es hat sich gezeigt, dass die Isolierung dadurch hinreichend entfernt werden kann, dass sie nach Einschneiden bis angrenzend an das Armierungsgewebe längs der Leitung, bevorzugt nach zusätzlichem umfänglichem Einschneiden, manuell von dem Armierungsgewebe abgezogen bzw. abgerissen werden kann, ohne dass eine anschließende Reinigung des Armierungsgewebes erforderlich wäre.

Erfindungsgemäß weist die Schlauchleitung zwischen einer auf das Armierungsgewebe aufgepressten Preßhülse und der Isolierschicht einen Bereich von maximal 2 mm, bevorzugter maximal 1 mm auf, in dem die Isolierschicht entfernt ist und das Armierungsgewebe nur von anhaftenden Resten der Isolierschicht oder nicht von der Isolierschicht überdeckt ist. Bei der Herstellung kann dies z.B. dadurch erreicht werden, dass die Isolierung in einem endständigen Bereich von dem Armierungsgewebe entfernt wird, der sich um 3 mm, bevorzugt 2 mm mehr entlang der Längsachse erstreckt, als die Preßhülse vor dem Pressen in Richtung der Längsachse misst. Denn durch das Pressen längt sich die Preßhülse, so dass sich die Preßhülse bis auf einen kleineren Abstand an die Isolierschicht erstreckt.

Die Erfindung wird nun mit Bezug auf die Figuren näher erläutert, die schematisch in
- Figur 1 einen Querschnitt durch eine Schlauchleitung aus Kunststoffschlauch, Armierungsgewebe und Isolierschicht,
- Figur 2 einen Querschnitt durch eine Schlauchleitung mit Faserschicht,
- Figur 3 eine Schlauchleitung mit einem Anschlußstück und
- Figur 4 ein Detail der Schlauchleitung mit Anschlußstück zeigen.

Die Schlauchleitung kann z.B. aus einem Kunststoffschlauch bestehen, der einen Innendurchmesser von 10 bis 30 mm mit einer Wandstärke von 2 bis 4 mm aufweist und aus PTFE besteht, der von einem Armierungsgewebe aus Edelstahldraht umklöppelt ist, das mit einer Isolierschicht umspritzt ist. Optional kann der Kunststoffschlauch ein innenliegendes Verstärkungsgewebe enthalten, optional kann zwischen dem Kunststoffschlauch und dem Armierungsgewebe eine Faserschicht liegen, z.B. Glasfasergewebe.

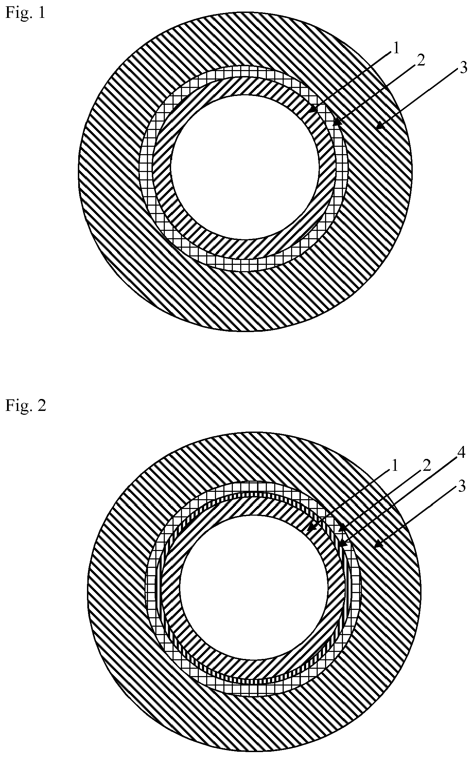

Die Figur 1 zeigt einen Kunststoffschlauch 1, auf dem unmittelbar das Armierungsgewebe 2 aufliegt, das von der durch Umspritzen hergestellten Isolierschicht aus vernetzer Kautschukmischung umgeben ist. Für die Herstellung wurde ein von Armierungsgewebe 2 umklöppelter Kunststoffschlauch 1 mittels Extrusion mit einer Kautschukmischung konzentrisch umspritzt und anschließend durch Wärmebehandlung vernetzt oder strahlenvernetzt, um die Isolierschicht 3 herzustellen. Es hat sich gezeigt, dass die Isolierschicht ohne zusätzliche Klebstoffschicht oder einen Haftvermittler ausreichend mit dem Armierungsgewebe 2 verbunden ist, um auch bei Belastung durch Biegen um 90°, z.B. für zumindest 1000 Zyklen, bevorzugt 5000 Zyklen, stabil mit dem Armierungsgewebe verbunden zu bleiben. Die Kautschukmischung bestand aus 100 phr Silikonkautschuk Elastosil R401/30, 0,56 phr Hitzestabilisatoren, 2,41 phr Flammschutzmittel Elastosil AUX SB2, 0,74 phr Verarbeitungshilfsmittel, 2,04 phr Peroxidvernetzer, 13 phr Silikonöl, 5,57 phr vorexpandierte Mikrokugeln Expancel 920 DE40 d30, 9,28 phr Pigmentpaste Elastosil PT (schwarz) und wies eine Mooney-Viskosität ML(1+4) nach DIN53523 Teil 3 nach Lagerung für 7d bei 23 °C von 7 ME auf.

Die Figur 2 zeigt eine Ausführungsform, in der die optionale Faserschicht 4 zwischen dem Kunststoffschlauch 1 und dem Armierungsgewebe 2 angeordnet ist. Die Isolierschicht wurde hergestellt, wie für die Ausführungsform von Figur 1 beschrieben.

Von einer Schlauchleitung nach Figur 1 oder Figur 2 wurde endständig die Isolierschicht für einen Längsabschnitt entsprechend der Länge einer Preßhülse plus 2 mm durch radiales Einschneiden, Einschneiden entlang der Längsachse und Abziehen in tangentialer Richtung entfernt. Ein vorgefertigtes Anschlußstück aus einem Rohrstück 5, einer daran drehbar festgelegten Mutter 6 und einer damit verbundenen Preßhülse 7 wurde auf den Bereich aufgeschoben, von dem die Isolierschicht abgezogen war. Die Preßhülse umfasste das Armierungsgewebe, an dem noch Reste der Isolierschicht hafteten. Der Abstand der Preßhülse zur Isolierschicht betrug ca. 2 mm. Mittels einer Presse wurde die Preßhülse radial auf das Armierungsgewebe gepreßt. Durch die Längung der Preßhülse betrug der Abstand zwischen der Preßhülse und der Isolierschicht ca. 1 mm. Die Verbindung des Anschlußstücks zur Schlauchleitung war zumindest bis zum Platzdruck der Schlauchleitung dicht.

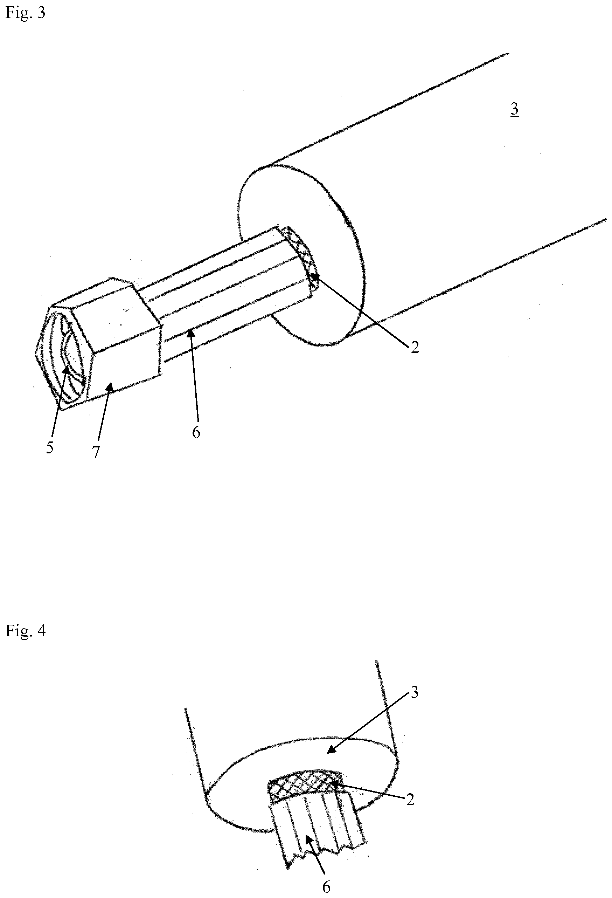

Die Figuren 3 und 4 zeigen die Isolierschicht 3 in einem Abstand von der Preßhülse 7, in dem das Armierungsgewebe 2 sichtbar ist. An dem Rohrstück 5 ist eine Mutter 6 drehbar angeordnet.

### Bezugszeichenliste:

- 1: Kunststoffschlauch
- 2: Armierungsgewebe
- 3: Isolierschicht
- 4: Faserschicht
- 5: Rohrstück
- 6: Mutter
- 7: Preßhülse

## Patentansprüche

1. Schlauchleitung mit einer Isolierschicht (3) zur Verwendung als Leitung für ein Temperiermedium mit einem elastischen Kunststoffschlauch (1), der von einem Armierungsgewebe (2) eingefasst ist, wobei die Isolierschicht (3) unmittelbar und formschlüssig auf dem Armierungsgewebe (2) aufliegt und vernetzt ist, **dadurch gekennzeichnet, dass** die Isolierschicht (3) Poren aufweist und dass die Schlauchleitung an zumindest einem Ende ein Anschlußstück mit einer Preßhülse (7) aufweist, die unmittelbar auf dem Armierungsgewebe (2) aufliegt, wobei in oder an dem Armierungsgewebe (2) Reste der Isolierschicht (3) haften und wobei die Isolierschicht (3) in einem Abstand von maximal 2 mm von der Preßhülse (7) auf dem Armierungsgewebe (2) angeordnet ist.

2. Schlauchleitung nach Anspruch 1, **dadurch gekennzeichnet, dass** die Isolierschicht (3) durch Extrusion einer vernetzbaren Kautschukmischung, die Mikrokugeln oder ein Treibmittel zur Porenbildung enthält, unmittelbar auf das Armierungsgewebe (2) und anschließendes Vernetzen hergestellt ist.

3. Schlauchleitung nach einem der voranstehenden Ansprüche, **dadurch gekennzeichnet, dass** zwischen dem Kunststoffschlauch (1) und dem Armierungsgewebe (2) eine Faserschicht (4) angeordnet ist.

4. Schlauchleitung nach Anspruch 3, **dadurch gekennzeichnet, dass** sie aus dem Kunststoffschlauch (1), einer darauf aufliegenden Faserschicht (4), dem auf der Faserschicht (4) aufliegenden Armierungsgewebe (2) und der Isolierschicht (3) besteht.

5. Schlauchleitung nach einem der Ansprüche 1 oder 2, **dadurch gekennzeichnet, dass** sie aus dem Kunststoffschlauch (1), dem unmittelbar auf dem Kunststoffschlauch (1) aufliegenden Armierungsgewebe (2) und der Isolierschicht (3) besteht.

6. Schlauchleitung nach einem der voranstehenden Ansprüche, **dadurch gekennzeichnet, dass** sie in einer Energiekette angeordnet ist, die schwenkbar aneinander angelenkte Elemente aufweist.

7. Schlauchleitung nach einem der voranstehenden Ansprüche, **dadurch gekennzeichnet, dass** die vernetzbare Kautschukmischung 100 phr Silikonkautschuk, 0 bis 6 phr Hitzestabilisatoren, 0 bis 6 phr Flammschutzmittel, 0 bis 3 phr Verarbeitungshilfsmittel, 1 bis 4 phr Peroxidvernetzer, 2 bis 20 phr Silikonöl, 2-15 phr Mikrokugeln, 0 bis 12 phr Pigmentpaste aufweist oder daraus besteht und eine Mooney-Viskosität ML(1+4) nach DIN53523 Teil 3 nach Lagerung für 7d bei 23 °C von 5-30 ME aufweist.

8. Verfahren zur Herstellung einer Schlauchleitung mit einer Isolierschicht (3) durch Umspritzen eines Kunststoffschlauchs (1), der von einem Armierungsgewebe (2) umfasst ist, mit einer vernetzbaren Kautschukmischung durch Extrusion unmittelbar auf das Armierungsgewebe (2) mit anschließendem Vernetzen zur Erzeugung der Isolierschicht (3) auf dem Armierungsgewebe (3), **dadurch gekennzeichnet, dass** von einem endständigen Bereich der Schlauchleitung die Isolierschicht (3) entfernt wird, wobei nach dem Entfernen der Isolierschicht (3) von einem endständigen Bereich der Schlauchleitung Reste der Isolierschicht (3) an dem Armierungsgewebe (2) anhaften bleiben, und ein Anschlußstück dadurch befestigt wird, dass dessen Rohrstück in den Kunststoffschlauch und dessen Preßhülse (7) über den endständigen Bereich des Armierungsgewebes (2) geschoben wird, mit anschließendem Pressen der Preßhülse (7) auf das Armierungsgewebe (2).

9. Verwendung einer Schlauchleitung nach einem der Ansprüche 1 bis 7, die an jedem ihrer beiden Enden eine Preßhülse aufweist, als Leitung für ein Temperiermedium, die dynamisch frei gebogen wird und nur die an beiden Enden der Schlauchleitung festgelegten Preßhülsen an gegeneinander bewegten Maschinenteilen festgelegt sind oder die dynamisch gebogen wird und in einer Energiekette geführt ist.

10. Verwendung nach Anspruch 9, **dadurch gekennzeichnet, dass** die Leitung bis in einen minimalen Biegeradius von maximal gleich dem fünf-fachen Außendurchmesser der Schlauchleitung zumindest 10-mal pro Stunde gebogen wird.

## Claims

1. Hose line having an insulating layer (3) for use as line for a temperature-control medium, with an elastic plastic hose (1) that is surrounded by a reinforcement fabric (2), wherein the insulating layer (3) directly and with positive fit lies on the reinforcement fabric (2) and is crosslinked, **characterized in that** the insulating layer (3) has pores and **in that** the hose line on at least one end has a connecting piece having a ferrule (7) that directly lies on the reinforcement fabric (2), wherein residues of the insulating layer (3) adhere in or at the reinforcement fabric (2) and wherein the insulating layer (3) is arranged on the reinforcement fabric (2) at a distance of at most 2 mm from the ferrule (7).

2. Hose line according to claim 1, **characterized in that** the insulating layer (3) is produced by extrusion of a crosslinkable rubber mixture comprising microspheres or a propellant for pore formation directly onto the reinforcement fabric (2) and subsequent crosslinking.

3. Hose line according to one of the preceding claims, **characterized in that** a fiber layer (4) is arranged between the plastic hose (1) and the reinforcement fabric (2).

4. Hose line according to claim 3, **characterized in that** it consists of the plastic hose (1), a fiber layer (4) lying thereon, the reinforcement fabric (2) that lies on the fiber layer (4), and the insulating layer (3).

5. Hose line according to one of claims 1 or 2, **characterized in that** it consists of the plastic hose (1), the reinforcement fabric (2) that directly lies on the plastic hose (1), and the insulating layer (3).

6. Hose line according to one of the preceding claims, **characterized in that** it is arranged in an energy chain comprising elements that are pivotably hinged to one another.

7. Hose line according to one of the preceding claims, **characterized in that** the crosslinkable rubber mixture comprises or consists of 100 phr silicone rubber, 0 to 6 phr heat stabilizers, 0 to 6 phr flame retardants, 0 to 3 phr processing agent, 1 to 4 phr peroxide crosslinker, 2 to 20 phr silicone oil, 2-15 phr microspheres, 0 to 12 phr pigment paste, and has a Mooney viscosity ML(1+4) according to DIN53523 part 3 after storage for 7d at 23 °C of 5-30 ME

8. Process for the production of a hose line having an insulating layer (3) by overmolding a plastic hose (1) that is surrounded by a reinforcement fabric (2) with a crosslinkable rubber mixture by extruding directly onto the reinforcement fabric (2) with subsequent crosslinking to generate the insulating layer (3) on the reinforcement fabric (2), **characterized in that** the insulating layer (3) is removed from a terminal area of the hose line, wherein after removing the insulating layer from a terminal area of the hose line, residues of the insulating layer (3) remain adhered to the reinforcement fabric (2), and a connecting piece is attached by sliding its pipe piece into the plastic hose (1) and its ferrule (7) over the terminal area of the reinforcement fabric (2), with subsequent pressing of the ferrule (7) onto the reinforcement fabric (2).

9. Use of a hose line according to one of claims 1 to 7 having a ferrule (7) at each of both its ends as a line for a temperature-control medium, which hose line is bent dynamically free and only the ferrules that are fixed to both ends of the hose line are fixed at machine parts that are movable against one another, or which hose line is dynamically bent and is guided in an energy chain.

10. Use according to claim 9, **characterized in that** the line is bent at least 10 times per hour up to a minimal bending radius of at most equal to the quintuple outer diameter of the hose line.

## Revendications

1. Conduite en tuyau souple avec une couche isolante (3) pour l'utilisation en tant que conduite pour un médium de régulation de température avec un tuyau en plastique élastique (1), qui est bordé d'un tissu d'armure (2), la couche isolante (3) reposant directement et avec une complémentarité de forme sur le tissu d'armure (2) et étant réticulée, **caractérisée en ce que** la couche isolante (3) présente des pores et **en ce que** la conduite en tuyau souple présente à au moins une extrémité un élément de raccord avec une douille de serrage (7) qui repose directement sur le tissu d'armure (2), des résidus de la couche isolante (3) adhérant dans ou sur le tissu d'armure (2) et la couche isolante (3) étant disposée à une distance de, au maximum, 2 mm de la douille de serrage (7) sur le tissu d'armure (2).

2. La conduite en tuyau souple selon la revendication 1, **caractérisée en ce que** la couche isolante (3) est fabriquée par l'extrusion d'un mélange de caoutchouc réticulable, qui contient des microsphères ou un agent d'expansion pour la formation de pores, directement sur le tissu d'armure (2) et une réticulation ultérieure.

3. La conduite en tuyau souple selon l'une des revendications précédentes, **caractérisée en ce qu'**une couche de fibres (4) est disposée entre le tuyau en plastique (1) et le tissu d'armure (2).

4. La conduite en tuyau souple selon la revendication 3, **caractérisée en ce qu'**elle est composée du tuyau en plastique (1), d'une couche de fibres (4) reposant là-dessus, du tissu d'armure (2) reposant sur la couche de fibres (4) et de la couche isolante (3).

5. La conduite en tuyau souple selon l'une des revendications 1 ou 2, **caractérisée en ce qu'**elle est composée du tuyau en plastique (1), du tissu d'armure (2) reposant directement sur le tuyau en plastique (1) et de la couche isolante (3).

6. La conduite en tuyau souple selon l'une des revendications précédentes, **caractérisée en ce qu'**elle est disposée dans une chaîne porte-câbles, qui présente des éléments liés l'un à l'autre de manière pivotante.

7. La conduite en tuyau souple selon l'une des revendications précédentes, **caractérisée en ce que** le mélange de caoutchouc réticulable présente ou est composé de 100 pcc de caoutchouc de silicone, 0 à 6 pcc de stabilisateurs de chaleur, 0 à 6 pcc d'ignifugeant, 0 à 3 pcc d'adjuvant de traitement, 1 à 4 pcc d'agent réticulant peroxyde, 2 à 20 pcc d'huile de silicone, 2-15 pcc de microsphères, 0 à 12 pcc de pâte pigmentaire et présente une viscosité Mooney ML(1 +4) selon DIN53523 Partie 3 après stockage pendant 7j à 23 °C de 5-30 unités Mooney.

8. Procédé de fabrication d'une conduite en tuyau souple avec une couche isolante (3) par le surmoulage par injection d'un tuyau en plastique (1), qui est bordé d'un tissu d'armure (2), avec un mélange de caoutchouc réticulable par extrusion directement sur le tissu d'armure (2) avec une réticulation ultérieure afin de produire la couche isolante (3) sur le tissu d'armure (3), **caractérisé en ce que** la couche isolante (3) est enlevée d'une zone terminale de la conduite en tuyau souple, des résidus de la couche isolante (3) continuant à adhérer au tissu d'armure (2) après l'enlèvement de la couche isolante (3) de la zone terminale de la conduite en tuyau souple, et un élément de raccord est rattaché en glissant sa section de tuyau dans le tuyau souple en plastique et sa douille de serrage (7) sur la zone terminale du tissu d'armure (2), avec un serrage ultérieur de la douille de serrage (7) sur le tissu d'armure (2).

9. Utilisation d'une conduite en tuyau souple selon l'une des revendications 1 à 7, qui présente une douille de serrage à chacune de ses deux extrémités, en tant que conduite pour un médium de régulation de température qui, en termes de dynamique, est pliée librement et uniquement les douilles de serrage fixées aux deux extrémités de la conduite en tuyau souple sont fixées à des pièces de machine se déplaçant l'une par rapport à l'autre, ou qui, en termes de dynamique, est pliée librement et guidé dans une chaîne porte-câbles.

10. L'utilisation selon la revendication 9, **caractérisée en ce que** la conduite est pliée jusque dans un rayon de courbure minimum égal, au maximum, au quintuple du diamètre extérieur de la conduite en tuyau souple au moins 10 fois par heure.
